**Europäisches Patentamt**

**European Patent Office**

**Office européen des brevets**

(11) Veröffentlichungsnummer: **0 146 857 B1**

## EUROPÄISCHE PATENTSCHRIFT

(45) Veröffentlichungstag der Patentschrift: **27.02.91**

(51) Int. Cl.⁵: **G01S 7/38**

(21) Anmeldenummer: **84114985.9**

(22) Anmeldetag: **08.12.84**

(54) **Flugkörper zur Störung bodengebundener Funkanlagen.**

(30) Priorität: **21.12.83 DE 3346156**

(43) Veröffentlichungstag der Anmeldung:
**03.07.85 Patentblatt 85/27**

(45) Bekanntmachung des Hinweises auf die
Patenterteilung:
**27.02.91 Patentblatt 91/09**

(84) Benannte Vertragsstaaten:
**DE FR GB IT**

(56) Entgegenhaltungen:
**DE-A- 3 106 032**
**US-A- 3 761 936**
**US-A- 4 025 920**

**R.C. HANSEN: "Microwave scanning antennas", Band 1: APERTURES, 1964, Seiten 220,221, Academic Press, New York, US.**

(73) Patentinhaber: **TELEFUNKEN SYSTEMTECHNIK GMBH**
**Sedanstrasse 10**
**W-7900 Ulm (Donau)(DE)**

(72) Erfinder: **Kuhrdt, Günther**
**Schützenweg 19**
**D-7915 Elchingen 1(DE)**

(74) Vertreter: **Schulze, Harald Rudolf, Dipl.-Ing. et al**
**TELEFUNKEN SYSTEMTECHNIK GMBH Sedanstrasse 10**
**D-7900 Ulm(DE)**

**Beschreibung**

Die Erfindung betrifft einen unbemannten Flugkörper der im Oberbegriff des Patentanspruchs 1 angegebenen Art. Solche Flugkörper sind auch unter der Bezeichnung Drohnen bekannt.

Derartige Störflugkörper fliegen während ihrer Mission über einem ausgedehnten Gebiet, in welchem sich bodengebundene Funkanlagen befinden, und überwachen dieses Gebiet auf das Auftreten von Signalen solcher Anlagen, beispielsweise Radarimpulsen, um durch Aussenden von Störsignalen, nach Maßgabe der empfangenen Signale, die Empfänger der bodengebundenen Radaranlagen durch erzwungene Erhöhung ihrer Falschalarmrate nachhaltig zu stören.

Aus der DE-A-3 106 032 ist eine bodengebundene Störsendereinrichtung bekannt, bei welcher zur Optimierung der Störleistung mindestens zwei in unterschiedliche Richtungen weisende Breitband-Richtantennen vorhanden sind. Diese werden über eine Umschalteinrichtung einerseits mit einem frequenz- und richtungsselektivem Suchempfangssystem verbunden, welches Frequenz und Richtung der zu störenden Anlage feststellt und andererseits mit einem Störsender, der dann nur in die zu störende Richtung geschaltet wird.

Aus R.C. Hansen: "Microwave scanning antennas". Band 1: Apertures, 1964, Seiten 220, 221, Academic Pres. New York, US sind parabolische sowie elliptische Torus-Reflektoren bekannt, deren Abtast-Winkelbereich über einen weiten Azimut-Winkelbereich wählbar ist.

Aus der US-A-4 025 920 ist ein Identifikationssystem für Radarsignale bekannt. Dabei werden die von verschiedenen Radaranlagen ausgesandten Impulsfolgen bezüglich ihrer Parameter in sehr kurzer Zeit (Echtzeit) analysiert, so daß daraus auszusendende Störsignale abgeleitet werden können.

Aus der US-A-3 761 936 ist weiterhin eine Vielstrahl Array-Antenne bekannt, bei welcher eine Vielzahl von Einzelantenne als gedruckte Schaltung auf einem dielektrischen Substrat angeordnet sind.

Aufgabe der vorliegenden Erfindung ist es, einen unbemannten Flugkörper der eingangs beschriebenen Art anzugeben, der zur Störung einer Mehrzahl von bodengebundenen Funkanlagen in einem ausgedehnten Gebiet einsetzbar ist.

Die Erfindung ist im Patentanspruch 1 beansprucht. Die Unteransprüche beinhalten bevorzugte Ausführungsformen und Weiterbildungen der Erfindung sowie einen besonders vorteilhaften Verwendungsfall.

Die Erfindung ist nachfolgend anhand der Abbildungen veranschaulicht. Dabei zeigt

FIG. 1     eine Heckansicht eines Flugkörpers mit Richtdiagrammen

FIG. 2     eine Aufsicht auf den Flugkörper mit Richtdiagrammen

FIG. 3     eine perspektivische Darstellung der Lage der Polarisationsebenen.

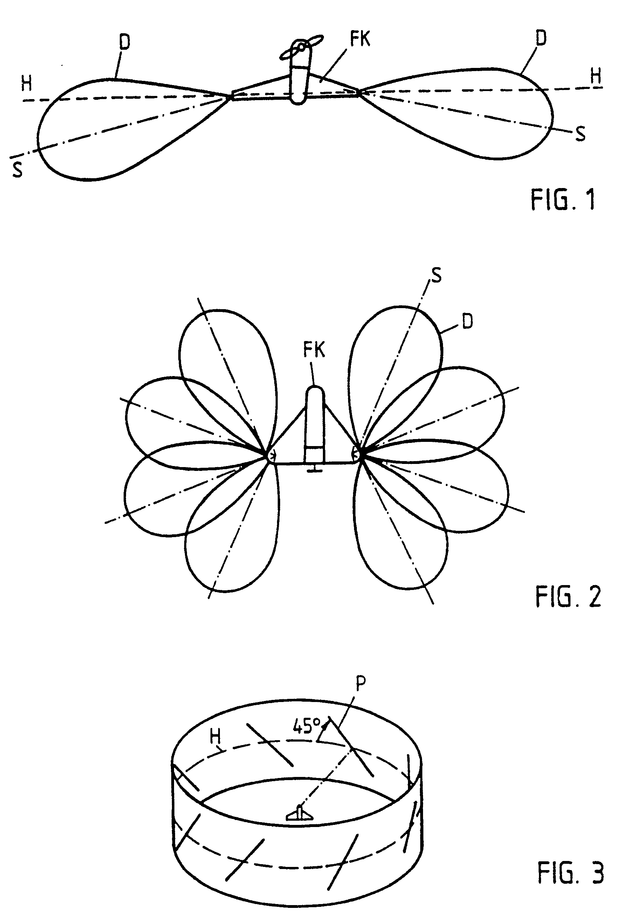

Am Umfang des in FIG. 1 und FIG. 2 skizzierten, durch einen Heckpropeller getriebenen Flugkörpers FK sind insgesamt acht Richtantennen angeordnet, die in zwei Vierergruppen in den Enden der Tragflächen untergebracht sind. Die Richtantennen decken mit ihren in verschiedene Azimutrichtungen weisenden und teilweise überlappenden Richtdiagrammen D den gesamten Azimutbereich ab (FIG. 2). Die Anordnung der Richtantennen am Umfang des Flugkörpers vermeidet Abschattungseffekte durch den Flugkörperrumpf.

Die Hauptachsen S der Richtantennen-Diagramme D sind annähernd horizontal ausgerichtet und schließen die Horizontalebene H in ihren Hauptkeulen ein. Die Strahlerachsen und damit die Hauptstrahlrichtungen der Diagramme sind nach unten gegen die Horizontale geneigt. Hierdurch ergibt sich ein großer Erfassungsbereich, der z. B. für Hauptkeulenkoinzidenz zwischen Flugkörper und einer Bodenradaranlage erst durch den Horizont begrenzt sein kann.

Die annähernd horizontale Ausrichtung der Antenne bringt allerdings das Problem mit sich, daß beim gleichzeitigen Einsatz mehrerer Flugkörper die Störsysteme zweier Flugkörper sich gegenseitig erregen können und dadurch ihre eigentliche Störfunktion beeinträchtigt wird. Gemäß einem weiteren Merkmal der Erfindung sind daher alle Einzelantennen linear polarisiert, wobei die Polarisationsebenen um 45° gegen die Horizontalebene geneigt sind. Die Neigung gegen die Horizontalebene ist dabei für die Polarisationsebenen aller Antennen in bezug auf die jeweilige Hauptstahlrichtung, also vom Flugkörper aus gesehen, gleichsinnig. In FIG 3 sind die Polarisationsebenen der mehreren Antennen als Schnittlinien mit einem fiktiven kreisförmigen Flugkörper veranschaulicht. Die Polarisationsebenen P sind gegen die Horizontalebene H um 45° vom Flugkörper aus gesehen im Uhrzeigersinn gedreht. Dadurch sind die aufeinander zuweisenden Antennen zweier sich begegnender Flugkörper, deren Antennen Polarisationsebenen im gleichen Sinn gegen die Horizontale geneigt sind, stets gegeneinander kreuzpolarisiert. Die Polarisations-Entkopplung benachbart arbeitender Flugkörper ist damit optimal. Der gleichzeitige Einsatz mehrerer derartiger Flugkörper im selben Gebiet mit gleichen oder zumindest überschneidenden Frequenzbereichen ist daher ein bevorzugter Verwendungsfall des erfindungsgemäßen Flugkörpers, wobei die Bedingung einzuhalten ist, daß bei allen Flugkörpern die Neigung der Polarisationsebenen der Einzelantennen in bezug auf die jeweilige Hauptstrahlrichtung gleichsinnig ist, also entweder im Uhrzeigersinn oder gegen den Uhrzeigersinn.

Die 45°-Neigung der Polarisationsebenen gegen die Horizontalebene hat zudem den Vorteil, daß die Kopplung mit den Antennen bodengebundener Funkanlagen, deren Polarisation horizontal, vertikal oder zirkular ist, mit annähernd gleichem Verlust von jeweils 3 dB erfolgt.

Zur vollständigen Unterdrückung gegenseitiger Erregung zweier benachbart arbeitender Flugkörper ist gemäß einer Weiterbildung der Erfindung in jedem Flugkörper ein Kennungsmodulator, der seine ausgesandten Störsignale mit einer zuvor einprogrammierten Kennung versieht, und ein Kennungsdemodulator, der die Kennungen aller anderen Flugkörper erkennt, vorgesehen. Bei Empfang eines Signals von einem anderen Flugkörper wird dieses durch Vergleich mit einem Speicher abgelegten Kennungen der anderen Flugkörper als solches erkannt und löst keinen Störvorgang aus.

In gleicher Weise kann auch die Störung "befreundeter" bodengebundener Anlagen vermieden werden, wenn deren Signale in besonderer Weise moduliert sind und diese Modulation vor dem Start des Flugkörpers als Kennung in den Speicher einprogrammiert ist.

## Ansprüche

1. Unbemannter Flugkörper zur Störung bodengebundener Funk- Sende- Empfangsanlagen, insbesondere Radaranlagen, der mittels eigener Sende- Empfangseinrichtungen und einer Sende- Empfangs-Antennenanordnung mit mehreren, verschiedene Azimutsektoren abdeckenden Richtdiagrammen Störsignale nach Maßgabe empfangener Signale aussendet, dadurch gekennzeichnet, daß die Sende-Empfangs-Antennenanordnung linear polarisiert ist und daß die Polarisationsebenen (P) der Richtdiagramme (D) Normalfluglage des Flugkörpers (FK) unter 45° gegen die Horizontalebene (H) geneigt sind, wobei die Neigung gegen die Horizontalebene (H) bei allen Richtdiagrammen (D) gleichsinnig in bezug auf die jeweilige Hauptachse (S) ist.

2. Unbemannter Flugkörper nach Anspruch 1, dadurch gekennzeichnet, daß die Hauptachsen (S) der Richtdiagramme (D) bezüglich der Horizontalebene (H) zum Erdboden hin geneigt sind und daß die Hauptkeulen der Richtdiagramme (D) die Horizontalebene (H) einschließen.

3. Unbemmanter Flugkörper nach Anspruch 1 oder 2, dadurch gekennzeichnet, daß die Antennenanordnung mehrere auf dem Umfang des Flugkörpers verteilte Einzelantennen enthält.

4. Unbemmanter Flugkörper nach Anspruch 3, gekennzeichnet durch einen Kennungsmodulator, einen Kennungsdemodulator und einen Speicher, in dem bekannte Kennungen fest vorgegeben sind, in jedem unbemannten Flugkörper (FK) und Einrichtungen, die das Ausgangssignal des Demodulators mit den Speicherinhalten vergleichen und beim Erkennen von Gleichheit die Auslösung eines Störvorgangs unterdrücken.

5. Unbemannter Flugkörper nach Anspruch 4, dadurch gekennzeichnet, daß der Speicher auch Kennungen von bekannten, nicht zu störenden bodengebundenen Funk-Sende-Empfangsanlagen enthält und daß die Einrichtungen Empfangssignale mit diesen Kennungen erkennen und die Auslösung eines entsprechenden Störvorgangs unterdrücken.

6. Verwendung eines unbemannten Flugkörpers nach einem der Ansprüche 1 bis 5 in einem System mit mehreren gleichzeitig betriebenen gleichartigen unbemannten Flugkörpern (FK), wobei die Neigung der Polarisationsebene (P) gegen die Horizontalebene (H), bezogen auf die jeweilige Hauptachse (S), bei den Antennen aller unbemannten Flugkörper (FK) gleichsinnig ist.

## Claims

1. Unmanned flying body for the jamming of ground-based radio transmitting and receiving installations, in particular radar installations, which by means of own transmitting and receiving equipments and a transmitting and receiving aerial arrangement with several directional diagrams covering different azimuth sectors emits jamming signals in accordance with received signals, characterised thereby, that the transmitting and receiving aerial arrangement is linearly polarised and that the polarisation planes (P) of the directional diagrams (D) are inclined at 45° to the horizontal plane (H) in normal flying attitude of the flying body (FK), wherein the inclination to the horizontal plane (H) is in the same sense in relation to the respective main axis (S) for all directional diagrams (D).

2. Unmanned flying body according to claim 1, characterised thereby, that the main axes (S) of the directional diagrams (D) are inclined to ground in respect of the horizontal plane (H) and that the main lobes of the directional diagrams (D) include the horizontal plane (H).

3. Unmanned flying body according to claim 1 or 2, characterised thereby, that the aerial arrangement contains several individual aerials distributed over the circumference of the flying body.

4. Unmanned flying body according to claim 3, characterised by an identification modulator, an identification demodulator and a store, in which known identifications are fixedly preset, in each unmanned flying body (FK) and equipments which compare the output signal of the demodulator with the store contents and on recognition of equality suppress the initiation of a jamming operation.

5. Unmanned flying body according to claim 4, characterised thereby, that the store also contains identifications of known ground-based radio transmitting and receiving installations which are not to be jammed and that equipments recognise received signals with these identifications and suppress the initiation of a corresponding jamming operation.

6. Use of an unmanned flying body according to one of the claims 1 to 5 in a system with several simultaneously operated unmanned flying bodies (FK) of like kind, wherein the inclination of the polarisation plane (P) to the horizontal plane (H) is in the same sense in relation to the respective main axis (S) for the aerials of all unmanned flying bodies (FK).

**Revendications**

1. Aérodyne sans équipage, destiné à brouiller des installations d'émission réception radioélectriques terrestres, en particulier des radars, aérodyne qui, au moyen d'équipements d'émission réception qui lui sont propres et d'un système d'antennes d'émission réception ayant plusieurs diagrammes directionnels couvrant différents secteurs azimutaux, émet des signaux brouilleurs en fonction de signaux reçus, caractérisé en ce que le système d'antennes d'émission réception est polarisé linéairement et que les plans de polarisation (P) des diagrammes directionnels (D) sont inclinés de 45° par rapport au plan horizontal (H) en position de vol normale de l'aérodyne (FK), l'inclinaison par rapport au plan horizontal' (H) de tous les diagrammes directionnels (D) ayant le même sens par rapport à l'axe principal (S) concerné.

2. Aérodyne sans équipage selon la revendication 1, caractérisé en ce que les axes principaux (S) des diagrammes directionnels (D) sont inclinés vers le sol, par rapport au plan horizontal (H), et que les lobes principaux des diagrammes directionnels (D) renferment le plan horizontal (H).

3. Aérodyne sans équipage selon la revendication 1 ou 2, caractérisé en ce que le système d'antennes comporte plusieurs antennes élémentaires réparties à la périphérie de l'aérodyne.

4. Aérodyne sans équipage selon la revendication 3, caractérisé par la prévision, dans chaque aérodyne sans équipage (FK), d'un modulateur d'indicatifs, d'un démodulateur d'indicatifs et une mémoire dans laquelle sont préfixés des indicatifs connus, ainsi que de dispositifs qui comparent le signal de sortie du démodulateur avec les contenus de la mémoire et suppriment le déclenchement d'un processus de brouillage lorsque la comparaison révèle une égalité.

5. Aérodyne sans équipage selon la revendication 4, caractérisé en ce que la mémoire contient également des indicatifs d'installations d'émission réception radioélectriques connues prévues au sol et qui ne doivent pas être brouillées, et que les dispositifs sont capables de reconnaître des signaux reçus présentant ces indicatifs et de supprimer le déclenchement d'un processus de brouillage lors d'une telle reconnaissance

6. Utilisation d'un aérodyne sans équipage selon une des revendications 1 à 5, dans un système comprenant plusieurs aérodynes (FK) semblables, sans équipages, qui sont utilisés simultanément, système dans lequel l'inclinaison du plan de polarisation (P) sur le plan horizontal (H), par rapport à l'axe principal (S) concerné, présente le même sens pour les antennes de tous les aérodynes (FK) sans équipage

FIG. 1

FIG. 2

FIG. 3